(19) Europäisches Patentamt / European Patent Office / Office européen des brevets

(11) **EP 4 192 027 A1**

(12) **EUROPEAN PATENT APPLICATION**
published in accordance with Art. 153(4) EPC

(43) Date of publication:
**07.06.2023  Bulletin 2023/23**

(21) Application number: **21850540.2**

(22) Date of filing: **02.08.2021**

(51) International Patent Classification (IPC):
**H04Q 11/00** *(2006.01)*

(52) Cooperative Patent Classification (CPC):
**H04Q 11/00**

(86) International application number:
**PCT/CN2021/110019**

(87) International publication number:
**WO 2022/022740 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **31.07.2020  CN 202010760518**

(71) Applicant: **ZTE Corporation**
**Shenzhen, Guangdong 518057 (CN)**

(72) Inventor: **TANG, Ningfeng**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **CONNECTION DETERMINATION METHOD, OPTICAL CROSS CONNECTION UNIT AND APPARATUS, AND EXCHANGE DEVICE AND MEDIUM**

(57)    Provided is a method for determining a connection relationship in an exchange device. The method comprises: determining, according to the number of first-stage optical connection units in an exchange device and the number of first-stage access points in an optical cross connection unit, the optical cross connection unit and a first target access point corresponding to a plurality of first-stage optical connection units; and determining, according to the number of second-stage optical connection units and the number of second-stage access points in the optical cross connection unit, the optical cross connection unit and a second target access point corresponding to a plurality of second-stage optical connection units, wherein each of the first-stage access points in the optical cross connection unit is in communication connection with the respective second-stage access points, such that each of the first-stage optical connection units is in communication connection with the respective second-stage optical connection units by means of the optical cross connection unit. Further provided are an optical cross connection unit, an optical cross connection apparatus, an exchange device, an electronic device and a computer-readable medium.

Determine, according to a number of first-stage optical interconnection units in the switching device and a number of first-stage access points in each optical cross interconnection unit, optical cross interconnection units and first target access points corresponding to a plurality of first-stage optical interconnection units — S110

Determine, according to a number of second-stage optical interconnection units in the switching device and a number of second-stage access points in each optical cross interconnection unit, optical cross interconnection units and second target access points corresponding to a plurality of second-stage optical interconnection units — S120

FIG. 2

**Description**

CROSS-REFERENCE TO RELATED APPLICATIONS

This application claims priority from Chinese patent application NO. 202010760518.0 filed on July 31, 2020, the entirety of which is incorporated herein by reference.

TECHNICAL FIELD

The present disclosure relates to the field of communication technology, and in particular relates to the field of switching devices.

BACKGROUND

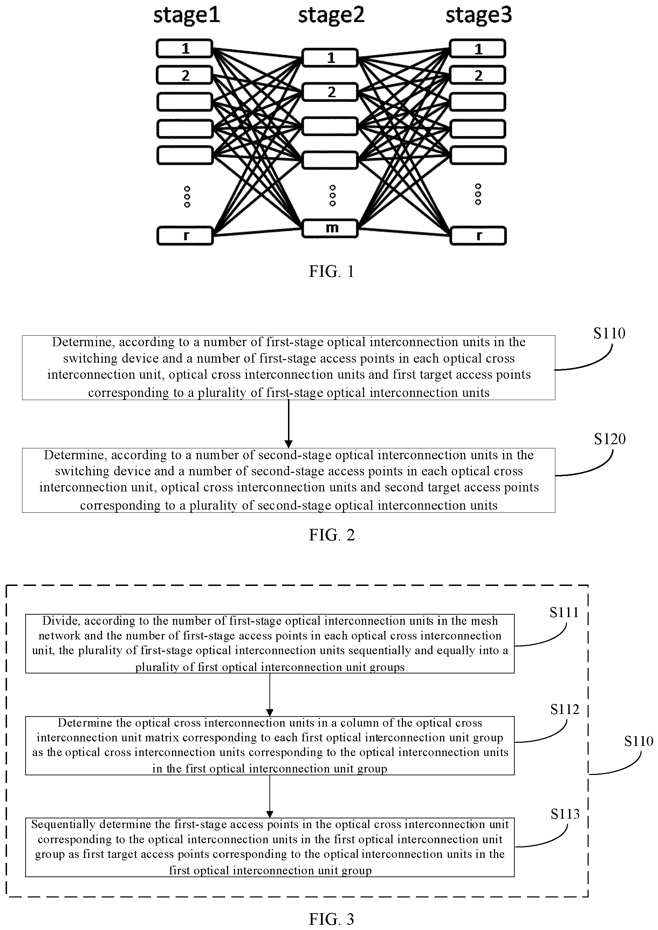

In a large-scale communication switching device, optical interconnection units are typically interconnected via a CLOS network topology. The CLOS network is a non-blocking switching network, and FIG. 1 is a schematic structural diagram of a three-stage switching CLOS network. As shown in FIG. 1, in the CLOS network, units (optical interconnection units) of two adjacent stages are in full connection. It should be noted that units of two adjacent stages in full connection means that each unit at each stage is connected to the respective units at a next stage. For example, as shown in FIG. 1, each unit at stage1 is connected to the respective units at stage2, and each unit at stage2 is connected to the respective units at stage3.

The capacity of the switching device is closely related to the number of interconnection fibers that can be provided between optical interconnection units. The more optical interconnection units are connected to the optical CLOS network at a same stage, the greater an overall capacity of the switching device will be. With the continuous improvement of the switching device capacity and the continuous expansion of the networking scale, implementation of the CLOS network becomes more and more complicated.

SUMMARY

Embodiments of the present disclosure provide a method for determining a connection relationship in a switching device, an optical cross interconnection unit, an optical cross interconnection apparatus, a switching device, an electronic device, and a computer-readable medium.

In a first aspect, an embodiment of the present disclosure provides a method for determining a connection relationship in a switching device, including: determining, according to a number of first-stage optical interconnection units in the switching device and a number of first-stage access points in each optical cross interconnection unit, optical cross interconnection units and first target access points corresponding to a plurality of first-stage optical interconnection units, where each first target access point is a first-stage access point in the optical cross interconnection unit for communicative connection with a corresponding first-stage optical interconnection unit; and determining, according to a number of second-stage optical interconnection units in the switching device and a number of second-stage access points in each optical cross interconnection unit, optical cross interconnection units and second target access points corresponding to a plurality of second-stage optical interconnection units, where each second target access point is a second-stage access point in the optical cross interconnection unit for communicative connection with a corresponding second-stage optical interconnection unit; where the switching device includes a plurality of first-stage optical interconnection units, a plurality of second-stage optical interconnection units, and a plurality of optical cross interconnection units, each optical cross interconnection unit includes a plurality of first-stage access points and a plurality of second-stage access points, each of the first-stage access points in the optical cross interconnection unit is in communicative connection with the respective second-stage access points, so that each of the first-stage optical interconnection units is in communicative connection with a corresponding second-stage optical interconnection unit via the optical cross interconnection unit.

In a second aspect, an embodiment of the present disclosure provides an optical cross interconnection unit, including: a plurality of first-stage access points and a plurality of second-stage access points; where each of the first-stage access points is in communicative connection with the respective second-stage access points, the first-stage access points are configured for communicative connection with first-stage optical interconnection units in a switching device, and the second-stage access points are configured for communicative connection with second-stage optical interconnection units in the switching device.

In a third aspect, an embodiment of the present disclosure provides an optical cross interconnection apparatus, including: at least one optical cross interconnection unit; where the optical cross interconnection unit includes a plurality of first-stage access points and a plurality of second-stage access points; each of the first-stage access points is in communicative connection with the respective second-stage access points, the first-stage access points are configured for communicative connection with first-stage optical interconnection units in a switching device, and the second-stage access points are configured for communicative connection with second-stage optical interconnection units in the switching device.

In a fourth aspect, an embodiment of the present disclosure provides a switching device, including: a plurality of first-stage optical interconnection units, a plurality of second-stage optical interconnection units, a plurality of third-stage optical interconnection units, and a plurality of optical cross interconnection units; where each optical cross interconnection unit includes a plurality of first-stage access points and a plurality of second-stage access points, and each of the first-stage access points is in communicative connection with the respective second-stage access points; each first-stage optical interconnection unit is in communicative connection with a first-stage access point of an optical cross interconnection unit for connecting the first-stage optical interconnection unit with a corresponding second-stage optical interconnection unit; each second-stage optical interconnection unit is in communicative connection with a second-stage access point of an optical cross interconnection unit for connecting the second-stage optical interconnection unit with a corresponding first-stage optical interconnection unit; each second-stage optical interconnection unit is in communicative connection with a second-stage access point of an optical cross interconnection unit for connecting the second-stage optical interconnection unit with a corresponding third-stage optical interconnection unit; and each third-stage optical interconnection unit is in communicative connection with a first-stage access point of an optical cross interconnection unit for connecting the third-stage optical interconnection unit with a corresponding second-stage optical interconnection unit.

In a fifth aspect, an embodiment of the present disclosure provides an electronic device, including: one or more processors; a memory having one or more programs stored thereon which, when executed by the one or more processors, cause the one or more processors to implement any method for determining a connection relationship in a switching device as described above; one or more I/O interfaces connected between the processors and the memory, and configured to enable information interaction between the processor and the memory.

In a sixth aspect, an embodiment of the present disclosure provides a computer-readable medium storing a computer program thereon which, when executed by a processor, causes any method for determining a connection relationship in a switching device as described above to be implemented.

BRIEF DESCRIPTION OF DRAWINGS

FIG. 1 is a schematic structural diagram of a CLOS network;
FIG. 2 is a flowchart of a method for determining a connection relationship according to an embodiment of the present disclosure;
FIG. 3 is a flowchart of some operations in another method for determining a connection relationship according to an embodiment of the present disclosure;
FIG. 4 is a flowchart of some operations in still another method for determining a connection relationship according to an embodiment of the present disclosure;
FIG. 5 is a flowchart of some operations in yet another method for determining a connection relationship according to an embodiment of the present disclosure;
FIG. 6 is a schematic structural diagram of a mesh network according to an embodiment of the present disclosure;
FIG. 7 is an exploded schematic diagram of a mesh network according to an embodiment of the present disclosure;
FIG. 8 is an exploded schematic diagram of a mesh network according to an embodiment of the present disclosure;
FIG. 9 is an exploded schematic diagram of a CLOS network according to an embodiment of the present disclosure;
FIG. 10 is a schematic diagram illustrating connection between optical interconnection units and optical cross interconnection units according to an embodiment of the present disclosure;
FIG. 11 is a schematic diagram illustrating connection between optical interconnection units and optical cross interconnection units according to an embodiment of the present disclosure;
FIG. 12 is a schematic diagram of an optical cross interconnection unit according to an embodiment of the present disclosure;
FIG. 13 is a schematic diagram of an optical cross interconnection apparatus according to an embodiment of the present disclosure;
FIG. 14 is a schematic diagram of another optical cross interconnection apparatus according to an embodiment of the present disclosure;
FIG. 15 is a schematic diagram of yet another optical cross interconnection apparatus according to an embodiment of the present disclosure;
FIG. 16 is a schematic diagram of still another optical cross interconnection apparatus according to an embodiment of the present disclosure;

FIG. 17 is a schematic diagram of still another optical cross interconnection apparatus according to an embodiment of the present disclosure;

FIG. 18 is a schematic diagram of a switching device according to an embodiment of the present disclosure;

FIG. 19 is a block diagram of an electronic device according to an embodiment of the present disclosure; and

FIG. 20 is a block diagram of a computer-readable medium according to an embodiment of the present disclosure.

DETAIL DESCRIPTION OF EMBODIMENTS

In order to make those skilled in the art better understand the technical solutions of the present disclosure, the method for determining a connection relationship in a switching device, the optical cross interconnection unit, the optical cross interconnection apparatus, the switching device, the electronic device and the computer-readable medium of present disclosure will be described in detail below with reference to the accompany drawings.

Example embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

The inventor of the present disclosure has found in research that in the CLOS network, since the capacity of the switching device is closely related to the number of interconnection fibers that can be provided between optical interconnection units, the number of interconnected optical fibers will be inevitably and significantly increased while pursuing to improve the capacity of the switching device. Especially in an ultra-large-scale networking system, the CLOS network size will become very large, and wiring between optical interconnection units will also become very complicated. Therefore, how to ensure reliability and convenience in implementation of the CLOS network has become an urgent problem to be solved in the engineering implementation aspect.

A mesh network refers to a form of network connection in which all nodes are directly connected. Since units at two adjacent stages of the CLOS network are fully connected, it may be regarded as that a mesh network is provided between units at two adjacent stages of the CLOS network.

After further research, the inventors of the present disclosure believe that if the mesh network can be decomposed to simplify complexity of the mesh network connection, the complexity of the CLOS network connection can be simplified, thereby improving the reliability and convenience in implementation of the CLOS network.

In view of this, in a first aspect, referring to FIG. 2, an embodiment of the present disclosure provides a method for determining a connection relationship in a switching device, including the following operations S110 and S120.

At operation S110, determining, according to the number of first-stage optical interconnection units in the switching device and the number of first-stage access points in each optical cross interconnection unit, optical cross interconnection units and first target access points corresponding to a plurality of first-stage optical interconnection units. Each first target access point is a first-stage access point in the optical cross interconnection unit for communicative connection with a corresponding first-stage optical interconnection unit.

At operation S120, determining, according to the number of second-stage optical interconnection units in the switching device and the number of second-stage access points in each optical cross interconnection unit, optical cross interconnection units and second target access points corresponding to a plurality of second-stage optical interconnection units. Each second target access point is a second-stage access point in the optical cross interconnection unit for communicative connection with a corresponding second-stage optical interconnection unit.

Each optical cross interconnection unit includes a plurality of first-stage access points and a plurality of second-stage access points, each of the first-stage access points in the optical cross interconnection unit is in communicative connection with the respective second-stage access points, so that each of the first-stage optical interconnection units is in communicative connection with the respective second-stage optical interconnection units via the optical cross interconnection unit.

In an embodiment of the present disclosure, there is provided an optical cross interconnection unit, including a plurality of first-stage access points and a plurality of second-stage access points. Each of the first-stage access points in the optical cross interconnection unit is in communicative connection with the respective second-stage access points, so that a large-scale mesh network topology interconnection is built by connecting standard, small-capacity optical cross interconnection units to each other. Therefore, the complexity in implementation of the mesh network, and thus the complexity in implementation of the CLOS network, are simplified.

It should be noted that, in the embodiment of the present disclosure, the switching device may have two or more stages of optical interconnection units, and the first-stage optical interconnection unit and the second-stage optical interconnection unit may any two adjacent stages of optical interconnection units in the switching device. This is not particularly limited in the embodiments of the present disclosure. As an optional implementation, the switching device includes three stages of optical interconnection units which constitute a CLOS network. It should be further noted that, in the embodiment of the present disclosure, the optical interconnection unit refers to a data processing unit that is connected to an external device through optical fibers, for example, one or more of a white box switch, a line card, a switch card, or the like connected to the outside via optical fibers, which is not particularly limited in the embodiments of the present disclosure.

In an embodiment of the present disclosure, the switching device may be a super-large scale data switch, a super-large scale router, a super-large scale service router (SR), a super-large scale broadband remote access server (BRAS), a super-large scale wavelength division device or the like, which is not particularly limited in the embodiments of the present disclosure.

It should be noted that the method for determining a connection relationship is executed by an electronic device having a processor, such as a computer. By executing the method for determining a connection relationship, a correspondence relationship between the first-stage optical interconnection units in the mesh network and the first-stage access points in the optical cross interconnection unit, and a correspondence relationship between the second-stage optical interconnection units and the second-stage access points in the optical cross interconnection unit are output for an engineer or automation equipment to connect the optical interconnection units and the optical cross interconnection units according to the output correspondence relationships, thereby constructing a large-scale mesh network topology interconnection, and thus implementing CLOS network interconnection.

It should be further noted that the number of first-stage optical interconnection units in the mesh network and the number of first-stage access points in the optical cross interconnection unit in operation S 110, as well as the number of second-stage optical interconnection units in the mesh network and the number of second-stage access points in the optical cross interconnection unit in operation S120 may be input by an engineer through an input device such as a keyboard; or may be acquired by reading the number stored in a storage medium. In addition, since the embodiment of the present disclosure provides a standardized optical cross interconnection unit, a model of the standardized optical cross interconnection unit and the like may be further stored in the storage medium, and by reading the model of the optical cross interconnection unit, the number of first-stage access points and the number of second-stage access points in the optical cross interconnection unit can be acquired. This is not particularly limited in the embodiments of the present disclosure.

In an embodiment of the present disclosure, the optical cross interconnection units and the first target access points corresponding to the first-stage optical interconnection units, and the optical cross interconnection units and the second target access points corresponding to the second-stage optical interconnection units are determined according to a predetermined rule. The predetermined rule satisfies that each first-stage optical interconnection unit corresponds to a plurality of optical cross interconnection units, and in each corresponding optical cross interconnection unit, each first-stage optical interconnection unit corresponds to a first target access point; and each second-stage optical interconnection unit corresponds to a plurality of optical cross interconnection units, and in each corresponding optical cross interconnection unit, each second-stage optical interconnection unit corresponds to a second target access point. Since each of the first-stage access points in the optical cross interconnection unit is in communicative connection with the respective second-stage access points, each of the first-stage optical interconnection units is in communicative connection with the respective second-stage optical interconnection units via the optical cross interconnection unit.

It should be further noted that, in the embodiment of the present disclosure, through operations S110 to S120, an existing mesh network can be decomposed and then constituted by a plurality of optical cross interconnection units; and a plurality of optical cross interconnection units can be combined to form a mesh network of a specific scale. For example, q*q optical cross interconnection units may be combined to form a mesh network having a network size being q times a network size of the optical cross interconnection units, where q is an integer greater than 2.

In the method for determining a connection relationship in a switching device according to the embodiment of the present disclosure, there is provided an optical cross interconnection unit, including a plurality of first-stage access points and a plurality of second-stage access points, and each of the first-stage access points in the optical cross interconnection unit is in communicative connection with the respective second-stage access points, so that a large-scale mesh network topology interconnection is built by connecting standard, small-capacity optical cross interconnection units to each other. Therefore, the complexity in implementation of the mesh network is simplified, and the reliability and convenience in implementation of the CLOS network are guaranteed. The method according to the embodiment of the present disclosure may be used to determine a connection relationship in a super-large scale data switch, a super-large scale router, a super-large scale SR, a super-large scale BRAS, a super-large scale wavelength division device, or any other optical interconnection device, so as to ensure the reliability and convenience in implementation of the optical interconnection apparatus.

As an optional implementation, in an embodiment of the present disclosure, while determining the connection relationship in the switching device through operations S110 to S120, an optical cross interconnection unit matrix including a plurality of optical cross interconnection units is introduced, where the first-stage optical interconnection units correspond to columns in the optical cross interconnection unit matrix, and the second-stage optical interconnection units correspond to rows in the optical cross interconnection unit matrix; or the first-stage optical interconnection units correspond to rows in the optical cross interconnection unit matrix, and the second-stage optical interconnection units correspond to columns in the optical cross interconnection unit matrix. Further, each first-stage optical interconnection unit corresponds to a plurality of optical cross interconnection units, and in each corresponding optical cross interconnection unit, each first-stage optical interconnection unit corresponds to a first target access point; and each second-stage optical interconnection unit corresponds to a plurality of optical cross interconnection units, and in each corresponding optical cross interconnection unit, each second-stage optical interconnection unit corresponds to a second target access point, so that the first-stage optical interconnection units and the second-stage optical interconnection units of the mesh network are in full connection.

Accordingly, referring to FIG. 3, in some embodiments, the plurality of optical cross interconnection units are arranged in an optical cross interconnection unit matrix, and the operation S110 includes the following operations S111 to S113.

At operation S111, dividing, according to the number of first-stage optical interconnection units in the switching device and the number of first-stage access points in each optical cross interconnection unit, the plurality of first-stage optical interconnection units sequentially and equally into a plurality of first optical interconnection unit groups. The number of first-stage optical interconnection units in each first optical interconnection unit group is equal to the number of first-stage access points in the optical cross interconnection unit, the number of first optical interconnection unit groups is equal to the number of columns in the optical cross interconnection unit matrix, and the plurality of first optical interconnection unit groups are in one-to-one correspondence with the columns in the optical cross interconnection unit matrix.

At operation S 112, determining the optical cross interconnection units in a column of the optical cross interconnection unit matrix corresponding to each first optical interconnection unit group as the optical cross interconnection units corresponding to the optical interconnection units in the first optical interconnection unit group.

At operation S 113, sequentially determining the respective first-stage access points in the optical cross interconnection unit corresponding to the optical interconnection units in the first optical interconnection unit group as first target access points corresponding to the respective optical interconnection units in the first optical interconnection unit group.

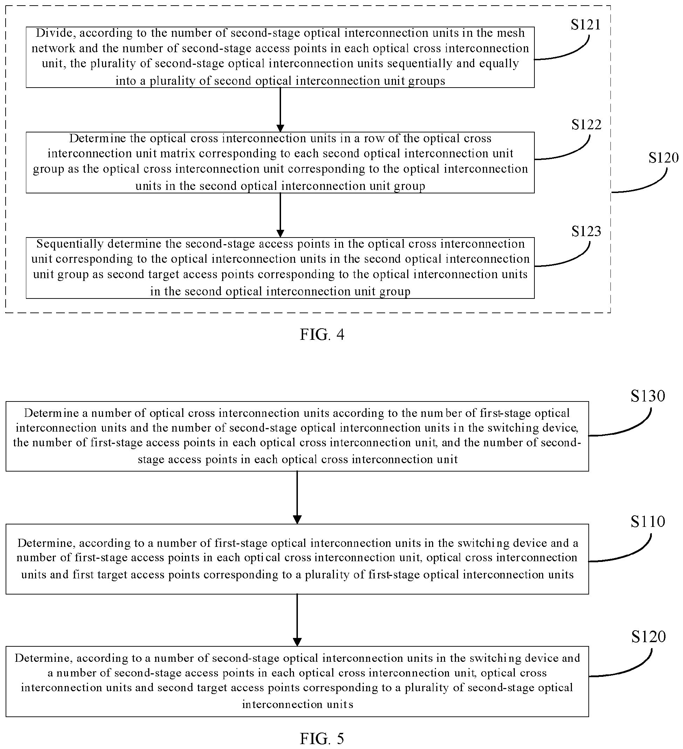

Accordingly, referring to FIG. 4, in some embodiments, the operation S120 includes the following operations S121 to S123.

At operation S121, dividing, according to the number of second-stage optical interconnection units in the mesh network and the number of second-stage access points in each optical cross interconnection unit, the plurality of second-stage optical interconnection units sequentially and equally into a plurality of second optical interconnection unit groups. The number of second-stage optical interconnection units in each second optical interconnection unit group is equal to the number of second-stage access points in the optical cross interconnection unit, the number of second optical interconnection unit groups is equal to the number of rows in the optical cross interconnection unit matrix, and the plurality of second optical interconnection unit groups are in one-to-one correspondence with the rows in the optical cross interconnection unit matrix.

At operation S122, determining the optical cross interconnection units in a row of the optical cross interconnection unit matrix corresponding to each second optical interconnection unit group as the optical cross interconnection unit corresponding to the optical interconnection units in the second optical interconnection unit group.

At operation S123, sequentially determining the respective second-stage access points in the optical cross interconnection unit corresponding to the optical interconnection units in the second optical interconnection unit group as second target access points corresponding to the respective optical interconnection units in the second optical interconnection unit group.

In the embodiments of the present disclosure, through operations S110 to S 120, an existing mesh network can be decomposed and then constituted by a plurality of optical cross interconnection units; and a plurality of optical cross interconnection units can be combined to form a mesh network of a specific scale. For example, q*q optical cross interconnection units may be combined to form a mesh network having a network size being q times a network size of the optical cross interconnection units, where q is an integer greater than 2. In an embodiment of the present disclosure, the number of optical cross interconnection units may be determined according to a size of the mesh network and a network size of the optical cross interconnection unit. The size of the mesh network is characterized by the number of first-stage optical interconnection units and the number of second-stage optical interconnection units, and the network size of the optical cross interconnection unit is characterized by the number of first-stage access points and the number of second-stage access points in the optical cross interconnection unit.

Correspondingly, referring to FIG. 5, before operations S110 and step S120, the method further includes operation S130.

At operation S130, determining the number of optical cross interconnection units according to the number of first-stage optical interconnection units and the number of second-stage optical interconnection units in the switching device, the number of first-stage access points in each optical cross interconnection unit, and the number of second-stage access points in each optical cross interconnection unit.

In some embodiments, the number of optical cross interconnection units is equal to a product of a ratio of the number of first-stage optical interconnection units to the number of first-stage access points in the optical cross interconnection unit and a ratio of the number of second-stage optical interconnection units to the number of second-stage access points in the optical cross interconnection unit.

In some embodiments, the ratio of the number of first-stage optical interconnection units to the number of first-stage access points in the optical cross interconnection unit is equal to the ratio of the number of second-stage optical interconnection units to the number of second-stage access points in the optical cross interconnection unit.

It should be further noted that, in the embodiment of the present disclosure, when the ratio of the number of first-stage optical interconnection units to the number of first-stage access points in the optical cross interconnection unit is equal to the ratio of the number of second-stage optical interconnection units to the number of second-stage access points in the optical cross interconnection unit, the mesh network can be decomposed into a network composed of k*k optical cross interconnection units, where k, the number of first-stage optical interconnection units, and the number of second-stage optical interconnection units satisfy formula (1):

$$k = \mathrm{CD}(r, m) \tag{1},$$

where $r$ is the number of the first-stage optical interconnection units, and $m$ is the number of second-stage optical interconnection units.

It can be obtained from formula (1) that $k$ is a common divisor of $r$ and $m$. It should be noted that, in the embodiment of the present disclosure, $k$ may be a greatest common divisor of $r$ and $m$, or a smallest common divisor (except 1) of $r$ and $m$, or any common divisor of r and $m$ other than the greatest common divisor and the smallest common divisor. This is not particularly limited in the embodiments of the present disclosure. In practical applications, a value of $k$ may be determined according to an actual network size and volume and location arrangement of the optical cross interconnection apparatus in engineering reality.

Embodiment I

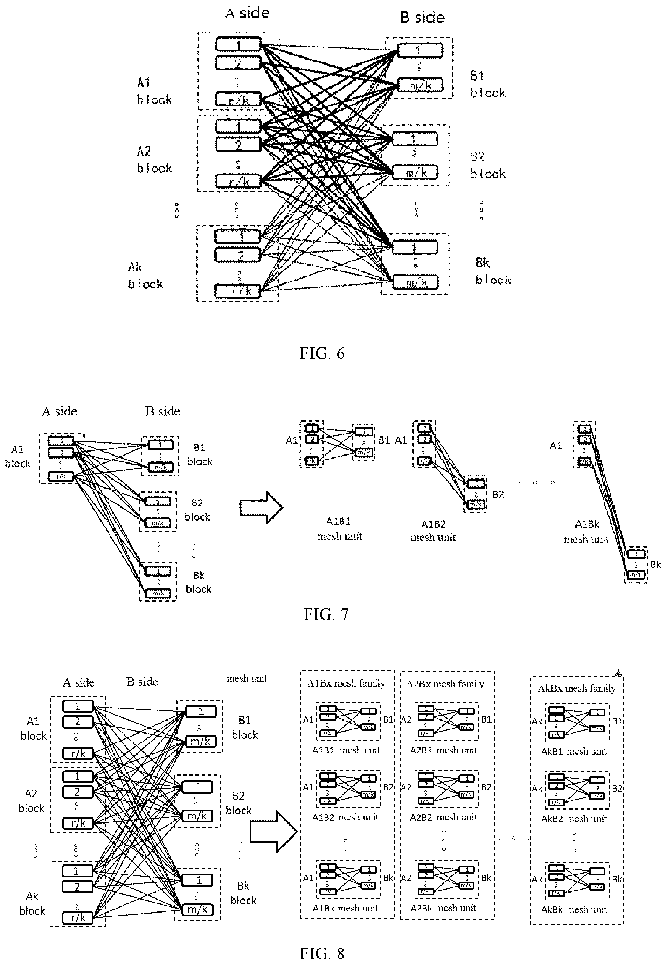

In this Embodiment I, as shown in FIG. 6, a mesh network has r first-stage optical interconnection units and m second-stage optical interconnection units. In FIG. 6, The first-stage optical interconnection units are collectively referred to as A side, and the second-stage optical interconnection units are collectively referred to as B side.

In this Embodiment I, the A side and B side optical interconnection units are sequentially and equally divided into k first optical interconnection unit groups and k second optical interconnection unit groups, respectively, that is, A1 block, A2 block,..., Ak block, and B1 block, B2 block,..., Bk block in FIG. 6, where k is a common divisor of r and m. Each first optical interconnection unit group includes r/k A side optical interconnection units, and each second optical interconnection unit group includes m/k B side optical interconnection units.

According to the interconnection characteristics of the mesh network, A1 block is connected to each of B1 block to Bk block at the B side, that is, the combination of A1 block and B1-Bk blocks may be decomposed into k optical cross interconnection units, as shown in FIG. 7. Each optical cross interconnection unit includes r/k first-stage access points and m/k second-stage access points, and the r/k first-stage access points are in full connection with the m/k second-stage access points. In this Embodiment I, the optical cross interconnection units corresponding to A1 block are respectively named as A1B1 mesh unit, A1B2 mesh unit,..., A1Bk mesh unit, and are further collectively referred to as A1Bx mesh family.

Similarly, the network topology between A2 block and B1 block to the Bk block at the B side may be decomposed into k optical cross interconnection units of a same topology. Each optical cross interconnection unit includes r/k first-stage access points and m/k second-stage access points in full connection. In this Embodiment I, the optical cross interconnection units corresponding to A2 block are respectively named as A2B1 mesh unit, A2B2 mesh unit,..., A2Bk mesh unit, and are further collectively referred to as A2Bx mesh family.

Similarly, the network topology between Ak block and B1 block to the Bk block at the B side may be decomposed into k optical cross interconnection units of a same topology. Each optical cross interconnection unit includes r/k first-stage access points and m/k second-stage access points in full connection. In this Embodiment I, the optical cross interconnection units corresponding to Ak block are respectively named as AkB1 mesh unit, AkB2 mesh unit,..., AkBk mesh unit, and are further collectively referred to as AkBx mesh family.

As shown in FIG. 8, in the Embodiment I, the r*m mesh network is decomposed into k*k optical cross interconnection units of a same network topology.

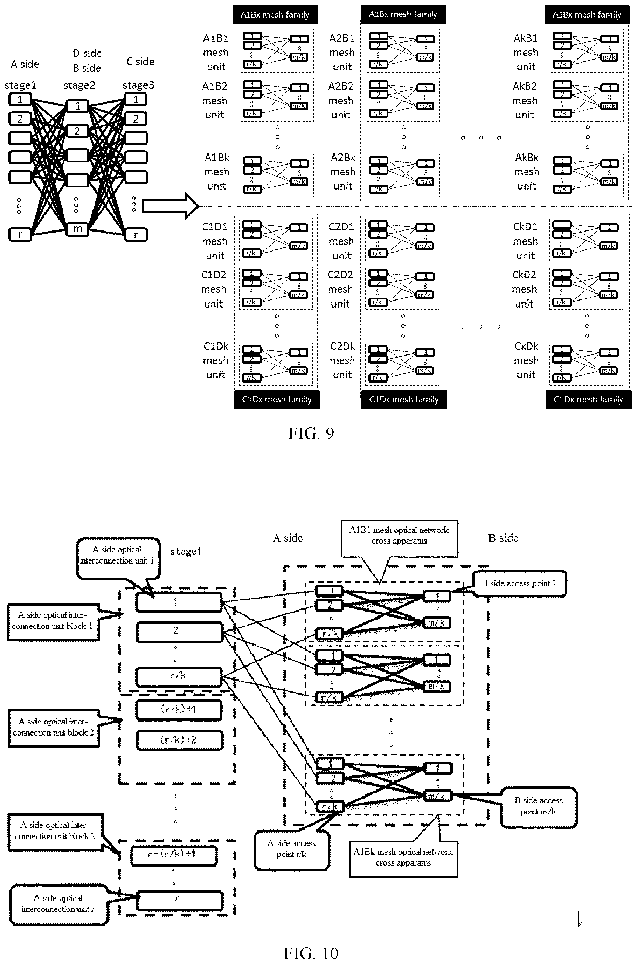

Similarly, as shown in FIG. 9, in the Embodiment I, the r*m*r three-stage CLOS network is decomposed into 2*k*k optical cross interconnection units of a same network topology. In FIG. 9, corresponding to a network between stage 1 and stage 2, the two sides are denoted as A side and B side, respectively, and the network is decomposed into an A1Bx mesh family, an A2Bx mesh family,..., an AkBx mesh family; and corresponding to a network between stage 2 and stage 3, the two sides are denoted as D side and C side, respectively, and the network is decomposed into a C1Dx mesh family, a C2Dx mesh family,..., a CkDx mesh family.

Embodiment II

In this Embodiment II, a mesh network has r first-stage optical interconnection units and m second-stage optical interconnection units. The first-stage optical interconnection units are collectively referred to as A side, and the second-stage optical interconnection units are collectively referred to as B side.

In this Embodiment II, the A side and B side optical interconnection units are sequentially and equally divided into k first optical interconnection unit groups and k second optical interconnection unit groups, respectively, that is, A1 block, A2 block,..., Ak block, and B1 block, B2 block,..., Bk block, where k is a common divisor of r and m . Each first optical interconnection unit group includes r/k A side optical interconnection units, and each second optical interconnection unit group includes m/k B side optical interconnection units.

In this Embodiment II, the (r/k)*(m/k) optical cross interconnection units are taken as merely a standard optical cross interconnection apparatus. In this Embodiment II there are k*k standard optical cross interconnection apparatuses, which are sorted and named in the following manner:

A1B1, A1B2,..., A1Bk, which are collectively described as A1Bx optical cross interconnection apparatus family;
A2B1, A2B2,..., A2Bk, which are collectively described as A2Bx optical cross interconnection apparatus family; ···
AkB1, AkB2,..., AkBk, which are collectively described as the AkBx optical cross interconnection apparatus family.

In this Embodiment II, the A1Bx optical cross interconnection apparatus family, the A2Bx optical cross interconnection apparatus family,...., the AkBx optical cross interconnection apparatus family are collectively referred to as Ax optical cross interconnection apparatus family.

Similarly, the above k*k optical cross interconnection apparatuses may be sorted and named in the following manner:

A1B1, A2B1,..., AkB1, which are collectively described as AxB1 optical cross interconnection apparatus family;
A1B2, A2B2,..., AkB2, which are collectively described as AxB2 optical cross interconnection apparatus family; ···
A1Bk, A2Bk,..., AkBk, which are collectively described as AxBk optical cross interconnection apparatus family.

In this Embodiment II, the AxB1 optical cross interconnection apparatus family, the AxB2 optical cross interconnection apparatus family,..., the AxBk optical cross interconnection apparatus family are collectively referred to as Bx mesh network cross apparatus family.

As shown in FIG. 10, in the Embodiment II, A1 block corresponds to the A1Bx optical cross interconnection apparatus family, the optical cross interconnection apparatuses A1B1, A1B2,..., A1Bk in the A1Bx optical cross interconnection apparatus family are optical cross interconnection apparatuses corresponding to the A1 block, and a first-stage access point 1 in each of the optical cross interconnection apparatuses A1B1, A1B2,..., A1Bk is the first target access point corresponding to an optical interconnection unit 1 in the A1 block, so on and so forth. Similarly, A2 block corresponds to the A2Bx optical cross interconnection apparatus family,..., Ak block corresponds to the AkBx optical cross interconnection apparatus family.

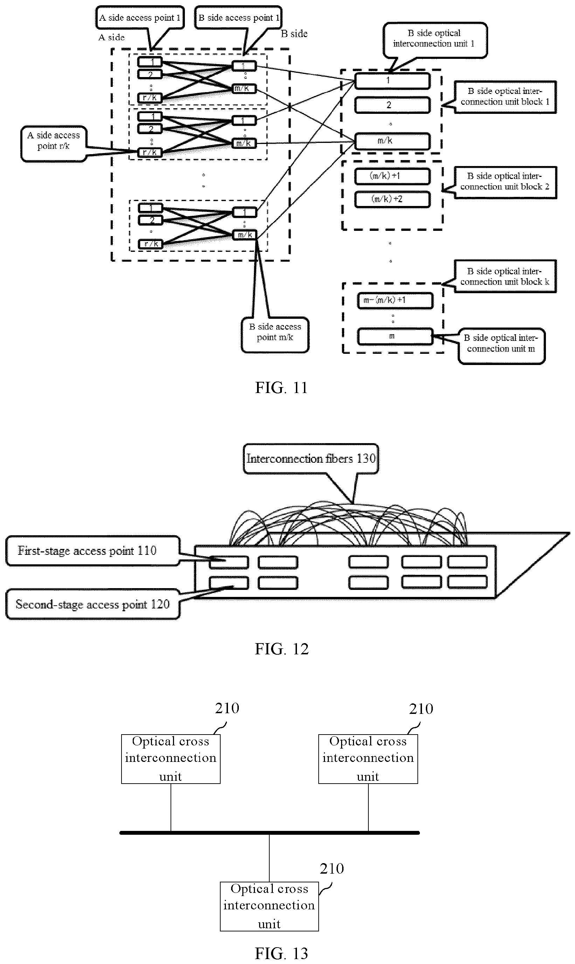

As shown in FIG. 11, in the Embodiment II, B1 block corresponds to the AxB1 optical cross interconnection apparatus family, the optical cross interconnection apparatuses A1B1, A2B1,..., AkB1 in the AxB1 optical cross interconnection apparatus family are optical cross interconnection apparatuses corresponding to the B1 block, and a second-stage access point 1 in each of the optical cross interconnection apparatuses A1B1, A2B1,..., AkB1 is the second target access point corresponding to an optical interconnection unit 1 in the B1 block, so on and so forth. Similarly, B2 block corresponds to the AxB2 optical cross interconnection apparatus family,..., Bk block corresponds to the AxBk optical cross interconnection apparatus family.

In this Embodiment II, each optical interconnection unit is connected to r/k or m/k optical interconnection units. Compared with the existing r*m mesh network, the number of connection points for each optical interconnection unit is greatly reduced, which greatly improves the efficiency and engineering reliability. Further in this Embodiment II, merely a mesh network topology of (r/k)*(m/k) is desired to be constructed. Compared with the existing r* mesh network topology, the complexity is reduced by k*k times, thereby greatly reducing the complexity of the optical cross interconnection units in the mesh network.

In the second aspect, referring to FIG. 12, an embodiment of the present disclosure provides an optical cross interconnection unit, including: a plurality of first-stage access points 110 and a plurality of second-stage access points 120. Each of the first-stage access points 110 is in communicative connection with the respective second-stage access points 120, the first-stage access points 110 are configured for communicative connection with first-stage optical interconnection units in a switching device, and the second-stage access points 120 are configured for communicative connection with second-stage optical interconnection units in the switching device.

The optical cross interconnection unit provided in the embodiment of the present disclosure includes a plurality of first-stage access points and a plurality of second-stage access points, and each of the first-stage access points in the optical cross interconnection unit is in communicative connection with the respective second-stage access points, so that a large-scale mesh network topology interconnection is built by connecting standard, small-capacity optical cross interconnection units to each other. Therefore, the complexity in implementation of the mesh network is simplified, and the reliability and convenience in implementation of the CLOS network are guaranteed.

Referring to FIG. 12, in some embodiments, the optical cross interconnection unit includes a plurality of interconnection fibers 130, and each of the first-stage access points 110 is in communicative connection with the corresponding second-stage access point 120 via the interconnection fibers 130.

In some embodiments, the optical cross interconnection unit includes an optical waveguide, and each of the first-stage access points 110 is in communicative connection with the corresponding second-stage access point 120 via the optical waveguide.

In some embodiments, the optical waveguide includes a glass-based optical waveguide.

It should be noted that, in the embodiment of the present disclosure, the optical waveguide has a relatively high density, and the first-stage access points and the second-stage access points are fully connected through the optical waveguide, so that an access density of the optical cross interconnection unit can be improved.

In some embodiments, the first-stage access points and/or the second-stage access points include optical connectors.

In some embodiments, the optical connectors are high-density optical connectors.

In an embodiment of the present disclosure, the optical cross interconnection unit further includes a panel on which the first-stage access points and the second-stage access points of the optical cross interconnection unit are disposed. As an optional implementation, the high-density optical connectors serving as the first-stage access points and the second-stage access points are disposed on the panel, and optical fibers from the optical interconnection unit are connected to the high-density optical connectors.

In a third aspect, referring to FIG. 13, an embodiment of the present disclosure provides an optical cross interconnection apparatus, including: at least one optical cross interconnection unit 210. The optical cross interconnection unit 210 includes a plurality of first-stage access points and a plurality of second-stage access points. Each of the first-stage access points is in communicative connection with the respective second-stage access points, the first-stage access points are configured for communicative connection with first-stage optical interconnection units in a switching device, and the second-stage access points are configured for communicative connection with second-stage optical interconnection units in the switching device.

The optical cross interconnection apparatus provided in the embodiment of the present disclosure includes at least one optical cross interconnection unit, each optical cross interconnection unit includes a plurality of first-stage access points and a plurality of second-stage access points, and each of the first-stage access points in the optical cross interconnection unit is in communicative connection with the respective second-stage access points, so that a large-scale mesh network topology interconnection is built by connecting standard, small-capacity optical cross interconnection units to each other. Therefore, the complexity in implementation of the mesh network is simplified, and the reliability and convenience in implementation of the CLOS network are guaranteed.

It should be noted that, in the embodiment of the present disclosure, the optical cross interconnection unit may be in the form of a white box or a plug-in card, which is not particularly limited in the embodiments of the present disclosure.

When the optical cross interconnection apparatus is in the form of a white box, the optical cross interconnection apparatus further includes a box body configured to support the panel and store the optical fibers, so as to protect the interconnection fibers and the high-density connectors from external interference, and facilitate engineering installation and maintenance.

Accordingly, in some embodiments, the optical cross interconnection apparatus further includes a box body; and the optical cross interconnection unit is disposed in the box body.

It should be noted that the box may be sized according to changes in the installation environment in engineering applications, which is not particularly limited in the embodiments of the present disclosure.

When the optical cross interconnection apparatus is in the form of a plug-in card, the optical cross interconnection apparatus further includes a tray configured to support the panel and the interconnection fibers/optical waveguide.

Accordingly, in some embodiments, the optical cross interconnection apparatus further includes a tray; and the optical cross interconnection unit is disposed on the tray.

In some embodiments, tray guide rails are further provided on the tray.

Embodiment III

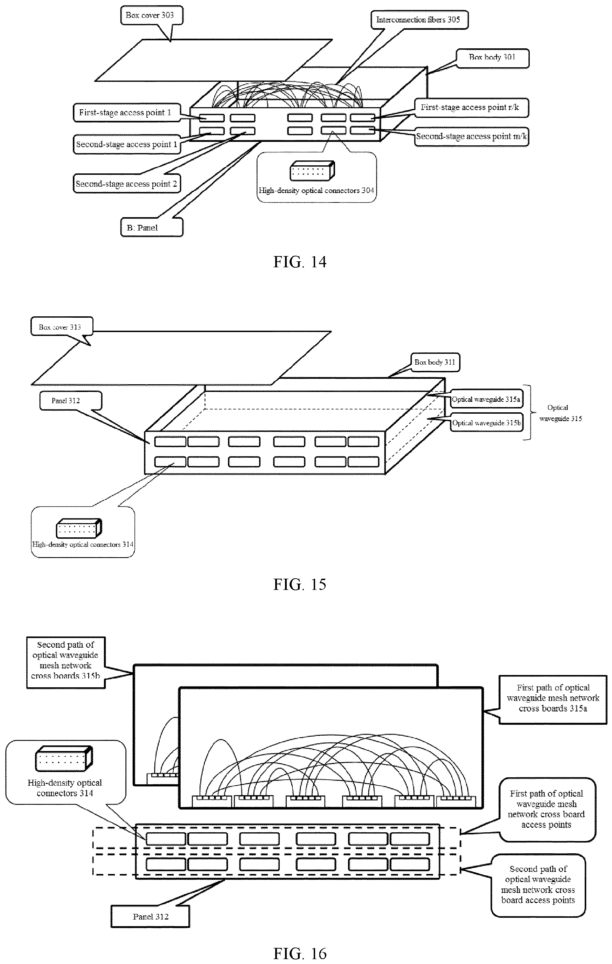

In this Embodiment III, as shown in FIG. 14, the optical cross interconnection apparatus is in the form of a white box, and the first-stage access points and the second-stage access points in the optical cross interconnection unit of the optical cross interconnection apparatus are fully connected by optical fibers.

A mesh network topology of (r/k)*(m/k) is formed in the optical cross interconnection unit.

The optical cross interconnection apparatus includes a box body 301, a panel 302, and a box cover 303. Two rows of high-density optical connectors 304 are provided on the panel 302, while the high-density optical connectors 304 are connected by interconnection fibers 305 at the other side.

There are (r/k)+(m/k) high-density optical connectors 304 arranged in two rows on the panel 302, which are:

an upper row including, from left to right, the first-stage access points of the optical cross interconnection unit: access point 1, access point 2,..., access point r/k; and
a lower row including, from left to right, the second-stage access points of the optical cross interconnection unit: access point 1, access point 2,..., access point m/k.

In this Embodiment III, the high-density optical connectors 304 are composed of two rows of optical joints, and the optical fibers of the optical interconnection unit are in communicative connection with the optical cross interconnection apparatus through the high-density optical connectors 304.

It should be noted that merely the situation where one optical cross interconnection apparatus includes one optical cross interconnection unit is shown in FIG. 14. In practical engineering, the number of optical cross interconnection units in a white-box optical cross interconnection apparatus may be properly set according to a size of the optical connectors, a size of the white box, and the number and volume of interconnection fibers. For example, a plurality of optical cross interconnection units may be placed in one optical cross interconnection apparatus. This is not particularly limited in the embodiments of the present disclosure.

Embodiment IV

In this Embodiment IV, as shown in FIG. 15, the optical cross interconnection apparatus is in the form of a white box, and the first-stage access points and the second-stage access points in the optical cross interconnection unit of the optical cross interconnection apparatus are fully connected by an optical waveguide.

A mesh network topology of (r/k)*(m/k) is formed in the optical cross interconnection unit, and in this Embodiment IV, two standard optical cross interconnection units are placed in the optical cross interconnection apparatus.

The optical cross interconnection apparatus includes a box body 311, a panel 312, and a box cover 313. Two rows of high-density optical connectors 314 are provided on the panel 312, while the high-density optical connectors 314 are connected by glass-based optical waveguides 315 at the other side.

In this Embodiment IV, an upper layer and a lower layer of optical waveguides 315 are provided to form an upper layer and a lower layer of standard optical cross interconnection units. The upper layer is denoted as a first path of optical waveguide cross interconnection units, and the lower layer is denoted as a second path of optical waveguide cross interconnection units. The upper layer of optical waveguides are used as a first path of optical waveguide mesh network cross boards, and the lower layer of optical waveguides are used as a second path of optical waveguide mesh network cross boards.

On the upper layer of the panel 312, sequentially arranged from left to right are first-stage access points of the first path of optical cross interconnection units: access point 1, access point 2,..., access point r/k, and second-stage access points of the first path of optical cross interconnection units: access point 1, access point 2,..., access point m/k. As shown in FIG. 15, the first-stage access points and the second-stage access points of the first path of optical cross interconnection units are communicatively connected through a first path of optical waveguide mesh network cross boards 315a.

On the lower layer of the panel 312, sequentially arranged from left to right are first-stage access points of the second path of optical cross interconnection units: access point 1, access point 2,..., access point r/k, and second-stage access points of the second path of optical cross interconnection units: access point 1, access point 2,..., access point m/k. As shown in FIG. 16, the first-stage access points and the second-stage access points of the second path of optical cross interconnection units are communicatively connected through a second path of optical waveguide mesh network cross boards 315b.

It should be noted that in this Embodiment IV, glass-based optical waveguides are used mainly considering a good cross function among optical paths of the waveguides. That is, the two paths of light can pass through each other in the waveguides at an angle greater than a certain angle with very little mutual interference. The glass base is selected mainly considering the relatively small loss of the glass base.

Embodiment V

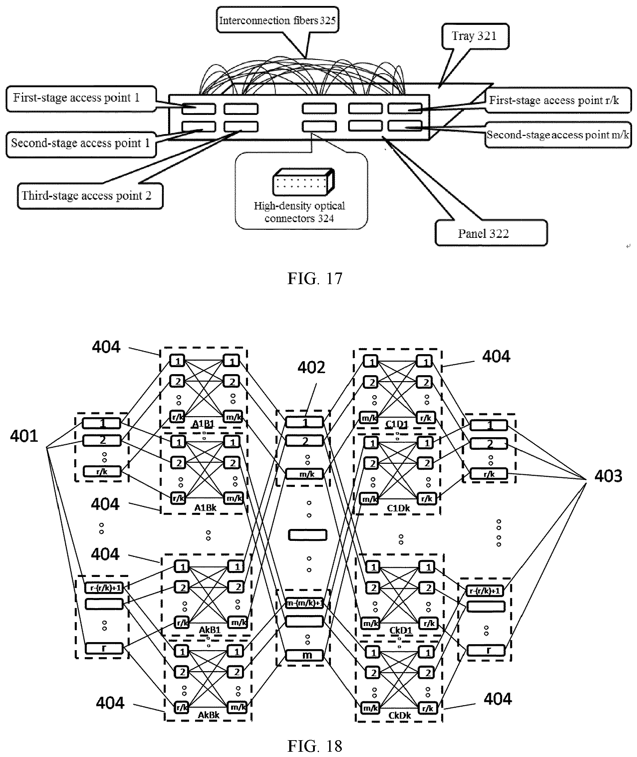

In this Embodiment V, as shown in FIG. 17, the optical cross interconnection apparatus is in the form of a plug-in card, and the first-stage access points and the second-stage access points in the optical cross interconnection unit of the optical cross interconnection apparatus are fully connected by interconnection fibers. A mesh network topology of (r/k)*(m/k) is formed in the optical cross interconnection unit.

The optical cross interconnection apparatus includes a tray 321, a panel 322, and tray guide rails (not shown). Two rows of high-density optical connectors 324 are provided on the panel 322, while the high-density optical connectors 324 are connected by interconnection fibers 325 at the other side.

It should be further noted that, in the Embodiment V of the present disclosure, the first-stage access points and the second-stage access points of the optical cross interconnection unit may be further interconnected via an optical waveguide, such as a glass-based optical waveguide.

In the fourth aspect, referring to FIG. 18, an embodiment of the present disclosure provides a switching device, including: a plurality of first-stage optical interconnection units 401, a plurality of second-stage optical interconnection units 402, a plurality of third-stage optical interconnection units 403, and a plurality of optical cross interconnection units 404.

The optical cross interconnection unit 404 includes a plurality of first-stage access points and a plurality of second-stage access points, and each of the first-stage access points is in communicative connection with the respective second-stage access points.

the first-stage optical interconnection units 401 are in communicative connection with first-stage access points of optical cross interconnection units 404 being for connecting the first-stage optical interconnection units 401 with the second-stage optical interconnection units 402;

the second-stage optical interconnection units 402 are in communicative connection with the second-stage access points of optical cross interconnection units 404 configured for connecting the second-stage optical interconnection units 402 with the first-stage optical interconnection units 401;

the second-stage optical interconnection units 402 are in communicative connection with the second-stage access points of optical cross interconnection units 404 configured for connecting the second-stage optical interconnection units 402 with the third-stage optical interconnection units 403; and

the third-stage optical interconnection units 403 are in communicative connection with the first-stage access points of optical cross interconnection units 404 configured for connecting the third-stage optical interconnection units 403 with the second-stage optical interconnection units 402.

In an embodiment of the present disclosure, the switching device may be a super-large scale data switch, a super-large scale router, a super-large scale service router (SR), a super-large scale broadband remote access server (BRAS), a super-large scale wavelength division device or the like, which is not particularly limited in the embodiments of the present disclosure.

It should be noted that, in the switching device provided in the embodiment of the present disclosure, a connection relationship of the first-stage optical interconnection units, the second-stage optical interconnection units, and the optical cross interconnection units is determined in the method for determining a connection relationship in a full connection mesh network according to the first aspect of the embodiments of the present disclosure, so that each of the first-stage optical interconnection units is in communicative connection with a corresponding second-stage optical interconnection unit via the optical cross interconnection unit. Meanwhile, a connection relationship of the second-stage optical interconnection units, the third-stage optical interconnection units, and the optical cross interconnection units is determined in the method for determining a connection relationship in a full connection mesh network according to the second aspect of the embodiments of the present disclosure, so that each of the second-stage optical interconnection units is in communicative connection with a corresponding third-stage optical interconnection unit via the optical cross interconnection unit. Therefore, a CLOS network topology is constructed.

In the switching device provided in the embodiments of the present disclosure, a large-scale CLOS network topology interconnection is built by connecting standard, small-capacity optical cross interconnection units to each other. Therefore, the complexity in implementation of the CLOS network is simplified, and the reliability and convenience in implementation of the CLOS network are guaranteed.

As an optional implementation, in an embodiment of the present disclosure, optical cross interconnection units of a same standard are adopted between the first-stage optical interconnection units and the second-stage optical interconnection units, and between the third-stage optical interconnection units and the second-stage optical interconnection units, thereby reducing the complexity in implementation of the CLOS network.

In some embodiments, optical cross interconnection units configured for connecting the first-stage optical interconnection units and the second-stage optical interconnection units are arranged in a first optical cross interconnection unit matrix, the plurality of first-stage optical interconnection units are sequentially and equally divided into a plurality of first optical interconnection unit groups, a number of first-stage optical interconnection units in each first optical interconnection unit group is equal to the number of first-stage access points in the optical cross interconnection unit, a number of first optical interconnection unit groups is equal to a number of columns in the first optical cross interconnection unit matrix, the plurality of first optical interconnection unit groups are in one-to-one correspondence with the columns in the first optical cross interconnection unit matrix, and
the first-stage optical interconnection units in the first optical interconnection unit group are in communicative connection with first-stage access points in a corresponding column of first optical cross interconnection units sequentially.

In some embodiments, the plurality of second-stage optical interconnection units are sequentially and equally divided into a plurality of second optical interconnection unit groups, a number of second-stage optical interconnection units in each second optical interconnection unit group is equal to the number of second-stage access points in the optical cross interconnection unit, a number of second optical interconnection unit groups is equal to a number of rows in the first optical cross interconnection unit matrix, the plurality of second optical interconnection unit groups are in one-to-one correspondence with the rows in the first optical cross interconnection unit matrix; and
the second-stage optical interconnection units in the second optical interconnection unit group are in communicative connection with second-stage access points in a corresponding row of first optical cross interconnection units sequentially.

It should be noted that the above connection mode between the first-stage optical interconnection units and the optical cross interconnection units, and the connection mode between the second-stage optical interconnection units and the optical cross interconnection units ensure that the plurality of first-stage optical interconnection units and the plurality of second-stage optical interconnection units in the switching device are in full connection. That is, a mesh network is constructed among the plurality of first-stage optical interconnection units and the plurality of second-stage optical interconnection units in the switching device.

In some embodiments, optical cross interconnection units configured for connecting the second-stage optical interconnection units and the third-stage optical interconnection units are arranged in a second optical cross interconnection unit matrix, the plurality of second-stage optical interconnection units are sequentially and equally divided into a plurality of third optical interconnection unit groups, a number of second-stage optical interconnection units in each third optical interconnection unit group is equal to the number of second-stage access points in the optical cross interconnection unit, a number of third optical interconnection unit groups is equal to a number of rows in the second optical cross interconnection unit matrix, the plurality of third optical interconnection unit groups are in one-to-one correspondence with the rows in the second optical cross interconnection unit matrix, and
the second-stage optical interconnection units in the third optical interconnection unit group are in communicative connection with second-stage access points in a corresponding row of optical cross interconnection units sequentially.

In some embodiments, the plurality of third-stage optical interconnection units are sequentially and equally divided into a plurality of fourth optical interconnection unit groups, a number of third-stage optical interconnection units in each fourth optical interconnection unit group is equal to the number of first-stage access points in the optical cross interconnection unit, a number of fourth optical interconnection unit groups is equal to a number of columns in the second optical cross interconnection unit matrix, the plurality of fourth optical interconnection unit groups are in one-to-one correspondence with the columns in the second optical cross interconnection unit matrix, and
the third-stage optical interconnection units in the fourth optical interconnection unit group are in communicative connection with first-stage access points in a corresponding column of optical cross interconnection units sequentially.

It should be noted that the above connection mode between the second-stage optical interconnection units and the optical cross interconnection units, and the connection mode between the third-stage optical interconnection units and the optical cross interconnection units ensure that the plurality of second-stage optical interconnection units and the plurality of third-stage optical interconnection units in the switching device are in full connection. That is, a mesh network is constructed among the plurality of second-stage optical interconnection units and the plurality of third-stage optical interconnection units in the switching device.

It should also be noted that when a mesh network is constructed among the plurality of first-stage optical interconnection units and the plurality of second-stage optical interconnection units in the switching device, and a mesh network is constructed among the plurality of second-stage optical interconnection units and the plurality of third-stage optical interconnection units in the switching device, a three-stage CLOS network is also constructed in the switching device.

In some embodiments, the number of first-stage optical interconnection units is equal to the number of third optical interconnection units.

A ratio of the number of first-stage optical interconnection units to the number of first-stage access points in the optical cross interconnection unit is equal to a ratio of the number of second-stage optical interconnection units to the number of second-stage access points in the optical cross interconnection unit, and a ratio of the number of third-stage optical interconnection units to the number of first-stage access points in the optical cross interconnection unit.

As another optional implementation , in an embodiments of the present disclosure, considering the difference in actual network topology, optical cross interconnection units of different standards are adopted between the first-stage optical interconnection units and the second-stage optical interconnection units, and between the third-stage optical interconnection units and the second-stage optical interconnection units. It should be noted that the optical cross interconnection units of different standards are different in at least one of the number of first-stage access points or the number of second-stage access points. In the embodiments of the present disclosure, an optical cross interconnection unit between a first-stage optical interconnection unit and a second-stage optical interconnection unit is referred to as a first optical cross interconnection unit, and an optical cross interconnection unit between a third-stage optical interconnection unit and a second-stage optical interconnection unit is referred to as a second optical cross interconnection unit.

It should be further noted that, assuming that the CLOS network is a network topology of $r_1 * m_1 * r_2$, the number of first-stage access points in the first optical cross interconnection unit is $p_1$, the number of second-stage access points is $p_2$, and $p_1$ and $p_2$ satisfy the condition that: $r_1$ is an integral multiple of $p_1$, and $m_1$ is an integral multiple of $p_2$. As an optional implementation, in addition to the above condition, $p_1$ and $p_2$ further satisfy $r_1/p_1 = m1/p_2 = k_1$, that is, $k_1$ is a common divisor of $r_1$ and mi.

Similarly, assuming that the number of first-stage access points in the second optical cross interconnection unit is $p_3$, the number of second-stage access points is $p_2$, and $p_3$ and $p_2$ satisfy the condition that: $r_2$ is an integral multiple of $p_3$, and mi is an integral multiple of $p_2$. As an optional implementation, in addition to the above condition, $p_3$ and $p_2$ further satisfy $r2/ p3 = m1/p2 = k2$, that is, $k_2$ is a common divisor of $r_2$ and mi.

In an optional implementation, $k_1 = k_2$, and $r_1 = r_2$. In this case, the first optical cross interconnection units and the second optical cross interconnection units are identical.

Accordingly, in some embodiments, the optical cross interconnection unit includes a first optical cross interconnection unit and a second optical cross interconnection unit, and the first optical cross interconnection unit has a different number of access points from the second optical cross interconnection unit. the first optical cross interconnection unit is configured to connect the first-stage optical interconnection units and the second-stage optical interconnection units; and the second optical cross interconnection unit is configured to connect the second-stage optical interconnection units and the third-stage optical interconnection units.

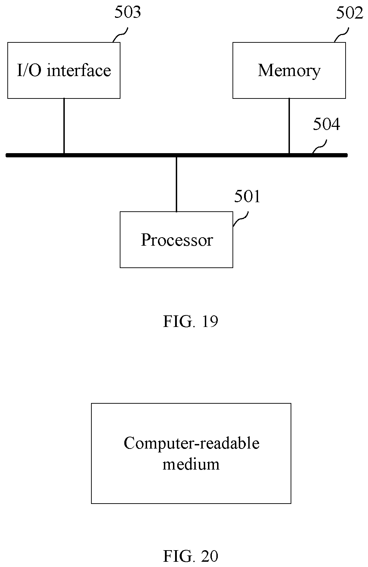

In a fifth aspect, referring to FIG. 19, an embodiment of the present disclosure provides an electronic device, including: one or more processors 501;

a memory 502 having one or more programs stored thereon which, when executed by the one or more processors, cause the one or more processors to implement any method for determining a connection relationship in a switching device as described above; and one or more I/O interfaces 503 connected between the processors 501 and the memory 502, and configured to enable information interaction between the processor and the memory.

Each processor 501 is a device with a data processing capability, including but not limited to a central processing unit (CPU), or the like; the memory 502 is a device with a data storage capability including but not limited to, a random access memory (RAM, more specifically SDRAM, DDR, etc.), a read only memory (ROM), an electrically erasable programmable read only memory (EEPROM) or a flash memory (FLASH); and The I/O interface (read/write interface) 503 is connected between the processors 501 and the memory 502 to enable information interaction between the processors 501 and the memory 502, and includes, but is not limited to, a bus or the like.

In some embodiments, the processors 501, the memory 502, and the I/O interface 503 are interconnected via a bus 504, and further connected to other components of a computing device.

The method for determining a connection relationship in a switching device has been described in detail above, and will not be repeated here.

In a sixth aspect, referring to FIG. 20, an embodiment of the present disclosure provides a computer-readable medium storing a computer program thereon which, when executed by a processor, causes any method for determining a connection relationship in a switching device as described above to be implemented.

The method for determining a connection relationship in a switching device has been described in detail above, and will not be repeated here.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

**Claims**

1. A method for determining a connection relationship in a switching device, comprising:

    determining, according to a number of first-stage optical interconnection units in the switching device and a number of first-stage access points in each optical cross interconnection unit, optical cross interconnection units and first target access points corresponding to a plurality of first-stage optical interconnection units, wherein each first target access point is a first-stage access point in the optical cross interconnection unit for communicative connection with a corresponding first-stage optical interconnection unit; and
    determining, according to a number of second-stage optical interconnection units in the switching device and a number of second-stage access points in each optical cross interconnection unit, optical cross interconnection units and second target access points corresponding to a plurality of second-stage optical interconnection units, wherein each second target access point is a second-stage access point in the optical cross interconnection unit for communicative connection with a corresponding second-stage optical interconnection unit;
    wherein the switching device comprises a plurality of first-stage optical interconnection units, a plurality of second-stage optical interconnection units, and a plurality of optical cross interconnection units, each optical cross interconnection unit comprises a plurality of first-stage access points and a plurality of second-stage access points, and each of the first-stage access points in the optical cross interconnection unit is in communicative connection with the respective second-stage access points, so that each of the first-stage optical interconnection units is in communicative connection with the respective second-stage optical interconnection units via the optical cross interconnection unit.

2. The method according to claim 1, wherein the plurality of optical cross interconnection units are arranged in an optical cross interconnection unit matrix, and the operation of determining, according to the number of first-stage optical interconnection units in the switching device and the number of first-stage access points in each optical cross interconnection unit, the optical cross interconnection unit and first target access points corresponding to the plurality of first-stage optical interconnection units comprises:

dividing, according to the number of first-stage optical interconnection units in the switching device and the number of first-stage access points in each optical cross interconnection unit, the plurality of first-stage optical interconnection units sequentially and equally into a plurality of first optical interconnection unit groups, wherein a number of first-stage optical interconnection units in each first optical interconnection unit group is equal to the number of first-stage access points in the optical cross interconnection unit, a number of first optical interconnection unit groups is equal to a number of columns in the optical cross interconnection unit matrix, and the plurality of first optical interconnection unit groups are in one-to-one correspondence with the columns in the optical cross interconnection unit matrix;

determining the optical cross interconnection units in a column of the optical cross interconnection unit matrix corresponding to each first optical interconnection unit group as the optical cross interconnection units corresponding to the optical interconnection units in the first optical interconnection unit group; and

sequentially determining the respective first-stage access points in the optical cross interconnection unit corresponding to the optical interconnection units in the first optical interconnection unit group as first target access points corresponding to the respective optical interconnection units in the first optical interconnection unit group.

3. The method according to claim 2, wherein the operation of determining, according to the number of second-stage optical interconnection units in the switching device and the number of second-stage access points in each optical cross interconnection unit, the optical cross interconnection units and the second target access points corresponding to the plurality of second-stage optical interconnection units comprises:

dividing, according to the number of second-stage optical interconnection units in the switching device and the number of second-stage access points in each optical cross interconnection unit, the plurality of second-stage optical interconnection units sequentially and equally into a plurality of second optical interconnection unit groups, wherein a number of second-stage optical interconnection units in each second optical interconnection unit group is equal to the number of second-stage access points in the optical cross interconnection unit, a number of second optical interconnection unit groups is equal to a number of rows in the optical cross interconnection unit matrix, and the plurality of second optical interconnection unit groups are in one-to-one correspondence with the rows in the optical cross interconnection unit matrix;

determining the optical cross interconnection units in a row of the optical cross interconnection unit matrix corresponding to each second optical interconnection unit group as the optical cross interconnection unit corresponding to the optical interconnection units in the second optical interconnection unit group; and

sequentially determining the respective second-stage access points in the optical cross interconnection unit corresponding to the optical interconnection units in the second optical interconnection unit group as second target access points corresponding to the respective optical interconnection units in the second optical interconnection unit group.

4. The method according to any one of claims 1 to 3, wherein prior to the operation of determining, according to the number of first-stage optical interconnection units in the switching device and the number of first-stage access points in each optical cross interconnection unit, the optical cross interconnection unit and first target access points corresponding to the plurality of first-stage optical interconnection units and the operation of determining, according to the number of second-stage optical interconnection units in the switching device and the number of second-stage access points in each optical cross interconnection unit, the optical cross interconnection units and the second target access points corresponding to the plurality of second-stage optical interconnection units, the method further comprises:

determining a number of optical cross interconnection units according to the number of first-stage optical interconnection units and the number of second-stage optical interconnection units in the switching device, the number of first-stage access points in each optical cross interconnection unit, and the number of second-stage access points in each optical cross interconnection unit.

5. The method according to any one of claims 1 to 3, wherein the number of optical cross interconnection units is equal to a product of a ratio of the number of first-stage optical interconnection units to the number of first-stage access points in the optical cross interconnection unit and a ratio of the number of second-stage optical interconnection units to the number of second-stage access points in the optical cross interconnection unit.

6. The method according to claim 5, wherein the ratio of the number of first-stage optical interconnection units to the number of first-stage access points in the optical cross interconnection unit is equal to the ratio of the number of second-stage optical interconnection units to the number of second-stage access points in the optical cross interconnection unit.

7. The method according to claim 6, wherein the number of optical cross interconnection units is k × k, wherein

k, the number of first-stage optical interconnection units, and the number of second-stage optical interconnection units satisfy:

$$k = \mathrm{CD}(r, m)$$

where $r$ is the number of first-stage optical interconnection units, and $m$ is the number of second-stage optical interconnection units.

8. An optical cross interconnection unit, comprising:

a plurality of first-stage access points and a plurality of second-stage access points;
wherein each of the first-stage access points is in communicative connection with the respective second-stage access points, the first-stage access points are configured for communicative connection with first-stage optical interconnection units in a switching device, and the second-stage access points are configured for communicative connection with second-stage optical interconnection units in the switching device.

9. The optical cross interconnection unit according to claim 8, wherein the optical cross interconnection unit comprises a plurality of interconnection fibers, and each of the first-stage access points is in communicative connection with the respective second-stage access points via the interconnection fibers.

10. The optical cross interconnection unit according to claim 8, wherein the optical cross interconnection unit comprises an optical waveguide, and each of the first-stage access points is in communicative connection with the respective second-stage access points via the optical waveguide.

11. The optical cross interconnection unit according to claim 10, wherein the optical waveguide comprises a glass-based optical waveguide.

12. The optical cross interconnection unit according to any one of claims 8 to 11, wherein the first-stage access points and/or the second-stage access points comprise optical connectors.

13. The optical cross interconnection unit according to claim 12, wherein the optical connectors are high-density optical connectors.

14. An optical cross interconnection apparatus, comprising:

at least one optical cross interconnection unit;
wherein the optical cross interconnection unit comprises a plurality of first-stage access points and a plurality of second-stage access points;
each of the first-stage access points is in communicative connection with the respective second-stage access points, the first-stage access points are configured for communicative connection with first-stage optical interconnection units in a switching device, and the second-stage access points are configured for communicative connection with second-stage optical interconnection units in the switching device.

15. The optical cross interconnection apparatus according to claim 14, wherein the optical cross interconnection apparatus further comprises a box body;
wherein the optical cross interconnection unit is disposed in the box body.

16. The optical cross interconnection apparatus according to claim 14 or 15, wherein the optical cross interconnection apparatus further comprises a tray;
wherein the optical cross interconnection unit is disposed on the tray.

17. A switching device, comprising:

a plurality of first-stage optical interconnection units, a plurality of second-stage optical interconnection units, a plurality of third-stage optical interconnection units, and a plurality of optical cross interconnection units; wherein

each optical cross interconnection unit comprises a plurality of first-stage access points and a plurality of second-stage access points, and each of the first-stage access points is in communicative connection with the respective second-stage access points;

the first-stage optical interconnection units are in communicative connection with the first-stage access points of optical cross interconnection units configured for connecting the first-stage optical interconnection units with the second-stage optical interconnection units;

the second-stage optical interconnection units are in communicative connection with the second-stage access points of optical cross interconnection units configured for connecting the second-stage optical interconnection units with the first-stage optical interconnection units;

the second-stage optical interconnection units are in communicative connection with the second-stage access points of optical cross interconnection units configured for connecting the second-stage optical interconnection units with the third-stage optical interconnection units; and

the third-stage optical interconnection units are in communicative connection with the first-stage access points of optical cross interconnection units configured for connecting the third-stage optical interconnection units with the second-stage optical interconnection units.

18. The switching device according to claim 17, wherein optical cross interconnection units configured for connecting the first-stage optical interconnection units and the second-stage optical interconnection units are arranged in a first optical cross interconnection unit matrix, the plurality of first-stage optical interconnection units are sequentially and equally divided into a plurality of first optical interconnection unit groups, a number of first-stage optical interconnection units in each first optical interconnection unit group is equal to the number of first-stage access points in the optical cross interconnection unit, a number of first optical interconnection unit groups is equal to a number of columns in the first optical cross interconnection unit matrix, the plurality of first optical interconnection unit groups are in one-to-one correspondence with the columns in the first optical cross interconnection unit matrix, and

the first-stage optical interconnection units in the first optical interconnection unit group are in communicative connection with first-stage access points in a corresponding column of optical cross interconnection units sequentially.

19. The switching device according to claim 18, wherein the plurality of second-stage optical interconnection units are sequentially and equally divided into a plurality of second optical interconnection unit groups, a number of second-stage optical interconnection units in each second optical interconnection unit group is equal to the number of second-stage access points in the optical cross interconnection unit, a number of second optical interconnection unit groups is equal to a number of rows in the first optical cross interconnection unit matrix, the plurality of second optical interconnection unit groups are in one-to-one correspondence with the rows in the first optical cross interconnection unit matrix; and

the second-stage optical interconnection units in the second optical interconnection unit group are in communicative connection with second-stage access points in a corresponding row of optical cross interconnection units sequentially.

20. The switching device according to claim 17, wherein optical cross interconnection units configured for connecting the second-stage optical interconnection units and the third-stage optical interconnection units are arranged in a second optical cross interconnection unit matrix, the plurality of second-stage optical interconnection units are sequentially and equally divided into a plurality of third optical interconnection unit groups, a number of second-stage optical interconnection units in each third optical interconnection unit group is equal to the number of second-stage access points in the optical cross interconnection unit, a number of third optical interconnection unit groups is equal to a number of rows in the second optical cross interconnection unit matrix, the plurality of third optical interconnection unit groups are in one-to-one correspondence with the rows in the second optical cross interconnection unit matrix, and

the second-stage optical interconnection units in the third optical interconnection unit group are in communicative connection with second-stage access points in a corresponding row of optical cross interconnection units sequentially.

21. The switching device according to claim 20, wherein the plurality of third-stage optical interconnection units are sequentially and equally divided into a plurality of fourth optical interconnection unit groups, a number of third-stage optical interconnection units in each fourth optical interconnection unit group is equal to the number of first-stage access points in the optical cross interconnection unit, a number of fourth optical interconnection unit groups is equal to a number of columns in the second optical cross interconnection unit matrix, the plurality of fourth optical interconnection unit groups are in one-to-one correspondence with the columns in the second optical cross interconnection unit matrix, and

the third-stage optical interconnection units in the fourth optical interconnection unit group are in communicative connection with first-stage access points in a corresponding column of optical cross interconnection units sequentially.

22. The switching device according to any one of claims 17 to 21, wherein each optical cross interconnection unit comprises a first optical cross interconnection unit and a second optical cross interconnection unit, and the first optical cross interconnection unit has a different number of access points from the second optical cross interconnection unit, wherein

the first optical cross interconnection unit is configured to connect the first-stage optical interconnection units and the second-stage optical interconnection units; and
the second optical cross interconnection unit is configured to connect the second-stage optical interconnection units and the third-stage optical interconnection units.

23. An electronic device comprising:

one or more processors;
a memory having one or more programs stored thereon which, when executed by the one or more processors, cause the one or more processors to implement the method for determining a connection relationship in a switching device according to any one of claims 1 to 7; and
one or more I/O interfaces connected between the processors and the memory, and configured to enable information interaction between the processor and the memory.

24. A computer-readable medium storing a computer program thereon which, when executed by a processor, causes the method for determining a connection relationship in a switching device according to any one of claims 1 to 7 to be implemented.

stage1        stage2        stage3

FIG. 1

| S110 |
| Determine, according to a number of first-stage optical interconnection units in the switching device and a number of first-stage access points in each optical cross interconnection unit, optical cross interconnection units and first target access points corresponding to a plurality of first-stage optical interconnection units |

| S120 |
| Determine, according to a number of second-stage optical interconnection units in the switching device and a number of second-stage access points in each optical cross interconnection unit, optical cross interconnection units and second target access points corresponding to a plurality of second-stage optical interconnection units |

FIG. 2

S111
Divide, according to the number of first-stage optical interconnection units in the mesh network and the number of first-stage access points in each optical cross interconnection unit, the plurality of first-stage optical interconnection units sequentially and equally into a plurality of first optical interconnection unit groups

S112
Determine the optical cross interconnection units in a column of the optical cross interconnection unit matrix corresponding to each first optical interconnection unit group as the optical cross interconnection units corresponding to the optical interconnection units in the first optical interconnection unit group

S110

S113
Sequentially determine the first-stage access points in the optical cross interconnection unit corresponding to the optical interconnection units in the first optical interconnection unit group as first target access points corresponding to the optical interconnection units in the first optical interconnection unit group

FIG. 3

Divide, according to the number of second-stage optical interconnection units in the mesh network and the number of second-stage access points in each optical cross interconnection unit, the plurality of second-stage optical interconnection units sequentially and equally into a plurality of second optical interconnection unit groups

S121

Determine the optical cross interconnection units in a row of the optical cross interconnection unit matrix corresponding to each second optical interconnection unit group as the optical cross interconnection unit corresponding to the optical interconnection units in the second optical interconnection unit group

S122

S120

Sequentially determine the second-stage access points in the optical cross interconnection unit corresponding to the optical interconnection units in the second optical interconnection unit group as second target access points corresponding to the optical interconnection units in the second optical interconnection unit group

S123

FIG. 4

Determine a number of optical cross interconnection units according to the number of first-stage optical interconnection units and the number of second-stage optical interconnection units in the switching device, the number of first-stage access points in each optical cross interconnection unit, and the number of second-stage access points in each optical cross interconnection unit

S130

Determine, according to a number of first-stage optical interconnection units in the switching device and a number of first-stage access points in each optical cross interconnection unit, optical cross interconnection units and first target access points corresponding to a plurality of first-stage optical interconnection units

S110

Determine, according to a number of second-stage optical interconnection units in the switching device and a number of second-stage access points in each optical cross interconnection unit, optical cross interconnection units and second target access points corresponding to a plurality of second-stage optical interconnection units

S120

FIG. 5

FIG. 6

FIG. 7

FIG. 8

FIG. 9

FIG. 10

A side access point 1

B side access point 1

A side

B side

B side optical interconnection unit 1

B side optical inter-connection unit block 1

1

2

m/k

A side access point r/k

1

2

r/K

1

2

r/K

1

2

r/K

1

m/k

1

m/k

1

m/k

(m/k)+1

(m/k)+2

B side optical inter-connection unit block 2

m−(m/k)+1

m

B side optical inter-connection unit block k

B side access point m/k

B side optical inter-connection unit m

FIG. 11

Interconnection fibers 130

First-stage access point 110

Second-stage access point 120

FIG. 12

210

210

Optical cross interconnection unit

Optical cross interconnection unit

210

Optical cross interconnection unit

FIG. 13

FIG. 14

FIG. 15

FIG. 16

EP 4 192 027 A1

FIG. 17

FIG. 18

503

502

I/O interface

Memory

504

501

Processor

FIG. 19

Computer-readable
medium

FIG. 20

## INTERNATIONAL SEARCH REPORT

| International application No. |
|---|
| **PCT/CN2021/110019** |

**A.    CLASSIFICATION OF SUBJECT MATTER**

H04Q 11/00(2006.01)i

According to International Patent Classification (IPC) or to both national classification and IPC

**B.    FIELDS SEARCHED**

Minimum documentation searched (classification system followed by classification symbols)

H04Q H04L H04B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 交换设备, 光互连, 光交叉, 接入点, 全网状, mesh网络, 分解, 矩阵, exchange, optical, interconnect+, cross, access point, CLOS, matrix

**C.    DOCUMENTS CONSIDERED TO BE RELEVANT**

| Category* | Citation of document, with indication, where appropriate, of the relevant passages | Relevant to claim No. |
|---|---|---|
| A | CN 109842445 A (HUAWEI TECHNOLOGIES CO., LTD.) 04 June 2019 (2019-06-04) description paragraphs [0004]-[0137], figures 1a-12 | 1-24 |
| A | CN 109327410 A (TIANJIN OPTICAL ELECTRICAL COMMUNICATION TECHNOLOGY CO., LTD.) 12 February 2019 (2019-02-12) entire document | 1-24 |
| A | KR 20130008827 A (KT CORP.) 23 January 2013 (2013-01-23) entire document | 1-24 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 September 2021** | **23 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/110019**

| Patent document cited in search report | | | Publication date (day/month/year) | Patent family member(s) | | | Publication date (day/month/year) |
|---|---|---|---|---|---|---|---|
| CN | 109842445 | A | 04 June 2019 | EP | 3706332 | A4 | 13 January 2021 |
| | | | | US | 2020292770 | A1 | 17 September 2020 |
| | | | | WO | 2019105241 | A1 | 06 June 2019 |
| | | | | EP | 3706332 | A1 | 09 September 2020 |
| | | | | CN | 109842445 | B | 05 February 2021 |
| CN | 109327410 | A | 12 February 2019 | CN | 109327410 | B | 22 September 2020 |
| KR | 20130008827 | A | 23 January 2013 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010760518